# EUROPÄISCHE PATENTANMELDUNG

(11) **EP 1 188 729 A2**
(43) Veröffentlichungstag der Anmeldung: **20.03.2002**
(21) Anmeldenummer: 01120058.1
(22) Anmeldetag: 21.08.2001
(51) Int. Cl.: C04B 35/80, C04B 35/117, C04B 35/119

(54) **Verbundwerkstoff mit plateletverstärkter Aluminiumoxidkeramik-Matrix**

(30) Priorität: 13.09.2000 DE 10045286
(71) Anmelder: CeramTec AG Innovative Ceramic Engineering, 73207 Plochingen (DE)
(72) Erfinder: Lehmann, Siegbert, 73207 Plochingen (DE); Burger, Wolfgang, Dr., 73207 Plochingen (DE); Friederich, Kilian, Dr., 73207 Plochingen (DE)
(74) Vertreter: Scherzberg, Andreas, Dr.

(57) **Zusammenfassung**

Verbundwerkstoffe mit plateletverstärkter Aluminiumoxidkeramik-Matrix eignen sich aufgrund ihrer Eigenschaften besonders zur Herstellung von Werkzeugen zur Zerspanung. Die Werkstoffe müssen deshalb eine hohe Bruchzähigkeit aufweisen.

Zur Verbesserung der Bruchzähigkeit wird erfindungsgemäß vorgeschlagen, einen Matrixwerkstoff aus oxidischen Werkstoffen, der durch mit Chromoxid dotierten SrAl₁₂O₁₉-Platelets verstärkt wird, mit feinstkörnigem Titancarbonitrid zu versetzen und durch Wärmebehandlung zu verdichten.

## Beschreibung

Die Erfindung betrifft einen Verbundwerkstoff entsprechend dem Oberbegriff des ersten Anspruchs.

Die "in situ"-Plateletverstärkung von oxidischen Werkstoffen mit Chromoxid dotierten SrAl₁₂O₁₉-Platelets ist in der EP 0 542 815 B1 beschrieben. Die der vorliegenden Erfindung zugrundeliegende Aufgabe bestand darin, den bekannten Werkstoff so zu verbessern, dass sich seine Bruchzähigkeit erhöht.

Nach der Erfindung wird der Matrixwerkstoff, wie er aus der obengenannten Schrift bekannt ist, mit feinstkörnigem Titancarbonitrid versetzt und durch Wärmebehandlung verdichtet. Dabei tritt eine Mikrostruktur auf, die die mechanischen Eigenschaften ganz wesentlich beeinflußt. Erfindungsgemäß bildenden sich Strontiumaluminat-Plättchen von etwa 20 µm Durchmesser und etwa 5 µm Dicke. Diese Plättchen bestehen aus epitaktisch verwachsenen mikroskopisch kleinen Kristallen, das heißt sie sind schichtweise in der gleichen kristollografischen Orientierung entstanden. Diese Kristalle sind für sich wiederum plättchenförmig ausgebildet und haben einen Durchmesser von maximal 4 µm, während ihre Dicke unter 1 µm liegt. Der Schichtverbund der Mikroplättchen bewirkt einen höheren Risswiderstand als in einkristallinen Makro-Plättchen, da innerhalb der Makro-Plättchen entlang der Korngrenzen zwischen den Mikroplättchen Rissablenkungen stattfinden können.

Aus diesem Grund eignen sich aus dem erfindungsgemäßen Werkstoff hergestellte Formkörper besonders zur Hartzerspanung, insbesondere von Hartguss, oder zum Hartfeindrehen von gehärtetem Stahl, beispielsweise von Kugellagerringen.

Formkörper aus dem erfindungsgemäßen Werkstoff können durch Sintern bei Temperaturen von bis zu 1550 C° hergestellt werden. Wird eine besondere Formgenauigkeit gefordert, ist es vorteilhaft, Formkörper durch isostatisches Heißpressen bei Temperaturen von maximal 1600 C° und einem Druck von bis zu 300 bar herzustellen.

## Patentansprüche

1. Verbundwerkstoff, bestehend aus einer Oxidkomponente A mit einer Aluminiumoxidkeramik-Matrix und einer Nichtoxidkomponente B, wobei der Anteil der nicht Nichtoxidkomponente B 0,1 bis 40 Gew.% der Summe der Anteile der Komponenten A + B beträgt und die Komponente A eine Zusammensetzung aufweist von
40 bis 97 Vol.% Al₂O₃, enthaltend 0,2 bis 0,6 Gew.% Cr₂O₃,
1 bis 32 Vol.% aus einem Mischkristall der Formel SrAl₁₂₋ₓCrₓO₁₉, wobei x einem Wert von 0,0007 bis 0,045 entspricht,
2 bis 40 Vol.% in den Matrixwerkstoff eingelagertem ZrO₂, das als stabilisierende Oxide ein oder mehrere Oxide der Lanthanoide, vorzugsweise 0,2 bis 3,5 Mol.% Y₂O₃, enthält,
wobei die Zugabemenge der stabilisierenden Oxide so gewählt ist, dass das Zirkoniumdioxid zu mehr als 90 Vol.% in der tetragonalen Modifikation vorliegt und eine 2 µm nicht überschreitende Korngröße aufweist,
die Komponente B aus einer oder mehreren der Verbindungen TiC, TiN, Ti (C,N), ZrC, ZrN, Zr (C,N), HfC, HfN, Hf (C,N), WC, TaC besteht
und der Anteil von SrAl₁₂₋ₓCrₓO₁₉ aus epitaktisch verwachsenen Kristallen besteht, die für sich wiederum aus schichtweise parallel angeordneten, einkristallinen Mikroplättchen bestehen.

2. Verbundwerkstoff nach Anspruch 1, **dadurch gekennzeichnet, dass** die polykristallinen Strontiumaluminat-Plättchen einen Durchmesser von etwa 20 µm und eine Dicke von etwa 5 µm aufweisen und die einkristallinen Mikroplättchen einen Durchmesser von maximal 4 um haben, während ihre Dicke unter 1 µm liegt.

3. Verbundwerkstoff nach Anspruch 1 oder 2, **dadurch gekennzeichnet, dass** das Verhältnis der Komponente B zum Verbund der Komponenten A+B 10 bis 35 %, bevorzugt 25 bis 33 %, beträgt.

4. Verbundwerkstoff nach einem der Ansprüche 1 bis 3, **dadurch gekennzeichnet, dass** der Anteil von ZrO₂ 5 bis 30 Vol.%, bevorzugt 13 bis 25 Vol.%, beträgt.

5. Sinterformkörper aus einem Verbundwerkstoff nach einem der Ansprüche 1 bis 4, **dadurch gekennzeichnet, dass** der Sinterformkörper bei einer Temperatur bis zu 1550 C° gesintert ist.

6. Sinterformkörper aus einem Verbundwerkstoff nach einem der Ansprüche 1 bis 4, **dadurch gekennzeichnet, dass** der Sinterformkörper heißgepresst ist bei einer Temperatur von bis zu 1600 C° und einem Druck bis zu 300 bar.
